# EUROPÄISCHE PATENTSCHRIFT

(11) **EP 0 990 359 B1**
(45) Veröffentlichungstag und Bekanntmachung des Hinweises auf die Patenterteilung: **31.10.2001**
(21) Anmeldenummer: 98936233.0
(22) Anmeldetag: 19.06.1998
(51) Int. Cl.: H04Q 7/36

(54) **EINRICHTUNG UND VERFAHREN ZUR VERWALTUNG UND ZUTEILUNG VON FUNKÜBERTRAGUNGSKANÄLEN IN MOBILFUNKSYSTEMEN**
METHOD AND DEVICE FOR MANAGING AND ALLOCATING RADIO TRANSMISSION CHANNELS IN MOBILE RADIOTELEPHONE SYSTEMS
DISPOSITIF ET PROCEDE POUR LA GESTION ET L'AFFECTATION DE CANAUX DE RADIOTRANSMISSION DANS DES SYSTEMES DE RADIOTELEPHONIE MOBILE

(30) Priorität: 19.06.1997 DE 19726101
(43) Veröffentlichungstag der Anmeldung: 05.04.2000
(73) Patentinhaber: SIEMENS AKTIENGESELLSCHAFT, 80333 München (DE)
(72) Erfinder: WIESEN, Michael, D-80689 München (DE); FÄRBER, Michael, D-82515 Wolfratshausen (DE)
(86) Internationale Anmeldenummer: DE9801690
(87) Internationale Veröffentlichungsnummer: WO9859510

(56) Entgegenhaltungen:
- EP-A- 0 504 122
- EP-A- 0 701 382
- WO-A-95/34957
- DE-A- 4 215 287
- US-A- 4 144 412
- VUCETIC J: "IMPLEMENTATION AND PERFORMANCE ANALYSIS OF MULTI-ALGORITHM DYNAMIC CHANNEL ALLOCATION IN A WIDEBAND CELLULAR NETWORK" 1996 IEEE INTERNATIONAL CONFERENCE ON COMMUNICATIONS (ICC), CONVERGING TECHNOLOGIES FOR TOMORROW'S APPLICATIONS DALLAS, JUNE 23 - 27, 1996, Bd. 3, 23. Juni 1996, Seiten 1270-1274, XP000625016 INSTITUTE OF ELECTRICAL & ELECTRONICS ENGINEERS
- CHEN A M ET AL: "RESOURCE MANAGEMENT FOR THIRD GENERATION CELLULAR COMMUNICATION SYSTEMS" 1997 IEEE 47TH. VEHICULAR TECHNOLOGY CONFERENCE, PHOENIX, MAY 4 - 7, 1997, Bd. 3, Nr. CONF. 47, 4. Mai 1997, Seiten 1832-1836, XP000738680 INSTITUTE OF ELECTRICAL AND ELECTRONICS ENGINEERS

## Beschreibung

Die Erfindung betrifft eine Einrichtung und ein Verfahren zur Verwaltung und Zuteilung von Funkübertragungskanälen innerhalb einer Funkzone in einem Mobilfunksystem.

Die Mobilfunksysteme der dritten Generation werden es einem mobilen Teilnehmer ermöglichen, auf eine große Anzahl von Kommunikationsdiensten mit unterschiedlichen Übertragungseigenschaften und -anforderungen zugreifen zu können. Um diese Möglichkeiten zu verwirklichen, muß die beschränkte Anzahl von Funkübertragungskanälen auf der Luftschnittstelle in optimaler Weise verwaltet und zugeteilt werden, ohne Einschränkungen durch die unterschiedlichen Anforderungen an die Übertragung der Kommunikationsdienste zu erfahren.

Zwei Verfahren zur dynamischen Verwaltung und Zuteilung von Funkübertragungskanälen (DCA - Dynamic Channel Allocation) sind aus dem Artikel "Channel Assignment Schemes for Cellular Mobile Telecommunication Systems: A comprehensive survey"; IEEE Personal Communications; June 1996; p. 10-31 von I. Katzela, M. Naghshineh bekannt. Bei beiden Verfahren werden alle Funkübertragungskanäle in einem zentralen Pool zusammengefaßt und bei Auftreten neuer Kommunikationsverbindungen den Funkzellen dynamisch zugeteilt. Jeder Funkübertragungskanal kann dabei unter der Voraussetzung der Erfüllung der Interferenzbedingungen in jeder Funkzelle verwendet werden.

Unterschieden wird zwischen einem zentralisierten-(centralized-) und einem verteilten (distributed-) DCA-Verfahren. Bei dem zentralisierten DCA-Verfahren wird ein Funkübertragungskanal temporär für eine Kommunikationsverbindung von einer zentralen Steuerung zugeteilt, währenddessen bei dem verteilten DCA-Verfahren ein Funkübertragungskanal temporär für eine Kommunikationsverbindung von der Basisstation zugeteilt wird, bei der die Verbindungsanforderung auftritt. In der Basisstation erfolgt dabei die Zuteilung allein unter Kenntnisnahme der eigenen Informationen bezüglich der Interferenzsituation und der Auslastung.

Diese beiden Verfahren zur Verwaltung und Zuteilung der Funkübertragungskanäle besitzen den Nachteil, daß nur die Übertragungskriterien als Entscheidungsgrundlage für die Zuteilung dienen und die jeweiligen Anforderungen der unterschiedlichen Kommunikationsverbindungen an die Übertragung unberücksichtigt bleiben.

Aus der US 4,144,412 ist ein Verfahren zur Zuweisung von Funkkanälen zu einer rufenden Mobilstation in einem Mobilfunksystem bekannt, bei dem in einer zentralen Funksteuereinrichtung eine für den Aufbau der Funkverbindung geeignete Mobilbasisstation sowie ein freier Sprachkanal ausgewählt wird. Diese Auswahl erfolgt auf der Basis von Intensitätsmessungen der von der Mobilstation gesendeten Signale durch mit der Funksteuereinrichtung verbundene Mobilbasisstationen. Die jeweiligen Intensitätsmessungen werden in einer Funksteuereinrichtung verglichen und diejenige Mobilbasisstation mit der höchsten Intensität ausgewählt. Nachfolgend wird ein freier Sprachkanal der ausgewählten Mobilbasisstation bestimmt und der Funkverbindung zugewiesen. Die Mobilbasisstationen sowie die Sprachkanäle bzw. deren aktueller Status werden in Speichereinrichtungen in der Funksteuereinrichtung verwaltet.

Aus der EP 0 504 122 A2 ist ein Verfahren zur Handover-Steuerung in einem zellularen Kommunikationssystem bekannt. Bei diesem Verfahren kann nicht nur die aktuell versorgende Basisstation, sondern auch eine jeweils benachbarte Basisstation ein Handover einer Mobilstation initiieren.

Aus der WO 95/34957 ist ein Verfahren zur adaptiven und automatischen Planung der Zuweisung von Frequenzen zu Übertragungskanälen innerhalb einer Anzahl von Funkzellen in einem zellularen Kommunikationssystem bekannt. Hierbei werden Qualitätsparameter für alle verfügbaren Frequenzen ermittelt. Nach einer Analyse der gemessenen Qualitätsparameter in Verbindung mit vorgegebenen Kriterien wird jedem Übertragungskanal eine jeweilige Frequenz zugewiesen.

Aus dem Artikel von J. Vucetic "Implementation and Performance Analysis of Multi-Algorithm Dynamic Channel Allocation in a Wideband Cellular Network", 1996 IEEE International Conference on Communications (ICC), Converging Technologies for Tomorrow's Applications, Dallas, June 23-27, 1996, Bd. 3, 23. Juni 1996, Seiten 1270-1274, ist ein Verfahren bekannt, bei dem mittels eines Einsatzes von mehreren dynamischen Kanalzuweisungsalgorithmen eine Verringerung der Blockierungswahrscheinlichkeit in einem digitalen zellularen Netzwerk erreicht wird. Hierzu werden mehrere Algorithmen gleichzeitig in einer Vermittlungseinrichtung des Netzwerkes implementiert. Abhängig von einer aktuellen Verkehrsbelastung und einer Interferenzsituation wird ein jeweils geeigneter Algorithmus ausgewählt, der eine geringste Blockierungswahrscheinlichkeit sicherstellt.

Der Erfindung liegt die Aufgabe zugrunde, eine Einrichtung und ein Verfahren zur Verwaltung und Zuteilung von Funkübertragungskanälen zu realisieren, die die begrenzte Anzahl von Funkübertragungskanälen innerhalb einer Funkzone möglichst optimal auslasten.

Die Aufgabe wird gemäß der Erfindung durch die Einrichtung nach den Merkmalen des Patentanspruchs 1 und durch das Verfahren nach den Merkmalen des Patentanspruchs 9 gelöst. Ausgestaltungen der Erfindung sind in den jeweiligen Unteransprüchen offenbart.

Nach der Erfindung werden die Funkübertragungskanäle in einer Funkzone durch die erfindungsgemäße Einrichtung verwaltet und zugeteilt. Diese Einrichtung weist zumindest eine Signalauswerteeinrichtung, eine Speichereinrichtung sowie eine Steuereinrichtung auf. Übertragungseigenschaften zwischen der Mobilstation und den jeweiligen Basisstationen der Funkzone werden in der Signalauswerteeinrichtung bestimmt und in einer Auswahlmatrix in der Speichereinrichtung als Parameter gespeichert. Zusätzlich wird in der Auswahlmatrix eine Diensteklasse als Parameter gespeichert. Weiterhin ist in der Speichereinrichtung eine Resourcenmatrix gespeichert, in der die in der Funkzone der Einrichtung zuteilbaren Funkübertragungskanäle verwaltet werden. Die Steuereinrichtung wertet die gespeicherten Parameter in der Auswahlmatrix aus und teilt abhängig von der Auswertung zumindest einen Funkübertragungskanal sowie zumindest eine Basisstation der Kommunikationsverbindung von/zu der Mobilstation zu.

In einer Ausgestaltung der Erfindung kann die Auswahlmatrix mit den folgenden Parametern oder einer beliebigen Kombination dieser Parameter gebildet werden, die den Basisstationen in der verwalteten Funkzone zugewiesen werden:
- Eigenschaften der Funkübertragungskanäle zwischen Mobilstation und Basisstationen,
- Kommunikationsverbindungen mit gemäß den Anforderungen an die Übertragungseigenschaften zugewiesenen Diensteklassen,
- Eigenschaften und Leistungsmerkmale der Mobilstation,
- Verweildauer der Mobilstation in den Funkzellen.

In einer weiteren Ausgestaltung kann die Ressourcenmatrix mit den Funkübertragungskanälen als Parameter gebildet werden, wobei die Zustände der jeweiligen Funkübertragungskanäle den Basisstationen in der verwalteten Funkzone zugewiesen werden.

Eine mit einem oder mehreren Parametern gebildete Auswahlmatrix ermöglicht es, die Zuteilung der Funkübertragungskanäle in Abhängigkeit von der Veränderung der Parameter zu gestalten. Es wird vorteilhaft die Anzahl und Auswahl der Basisstationen für die Kommunikationsverbindungen mit der Mobilstation und die Zuteilung der Funkübertragungskanäle an die Basisstationen dynamisch verändert und somit eine möglichst optimale Lastverteilung verwirklicht.

Gemäß einer weiteren Ausgestaltung werden die Parameter zyklisch auf den neuesten Stand gebracht. Die Überwachung der Übertragungseigenschaften kann in der Weise erfolgen, daß in regelmäßigen oder durch die Übertragungsqualität angeregten Zeitabständen Übertragungsparameter wie die Empfangssignalstärke RXLEV (Receive Signal Input Level) und die Signalqualität RXQUAL (Radio Link Quality) gemessen und in der Funksystem-Steuerung zusammengeführt werden. Diese Messungen ermöglichen unter anderem die Abschätzung der Übertragungsverluste und der Gleichkanalinterferenzen.

Es besteht die Möglichkeit, die Funkübertragungskanäle für Kommunikationsverbindungen gleicher oder unterschiedlicher Diensteklassen von/zu der Mobilstation einer oder mehreren Basisstationen zuzuteilen. Ebenso ist es möglich, daß die Funkübertragungskanäle für asymmetrische Kommunikationsverbindungen Diensteklassen von/zu der Mobilstation in Ab- und Aufwärtsrichtung unterschiedlichen Basisstationen zugeteilt werden.

Bei in mehrere Signalkomponenten aufgeteilten Kommunikationsverbindungen - beispielsweise für Paketdienste - können die Signalkomponenten sequentiell oder parallel unterschiedlichen Funkübertragungskanälen mehrerer Basisstationen zugewiesen werden.

Die Einrichtung gemäß der Erfindung kann in einer Vermittlungseinrichtung des Mobilfunksystems verwirklicht oder mit einer derartigen Vermittlungseinrichtung verbunden sein, wobei zweckmäßigerweise mehrere erfindungsgemäße Einrichtungen miteinander verbunden sind, um das Verwalten und Zuteilen der Funkübertragungskanäle an die Basisstationen funkzonenübergreifend zu koordinieren. Durch diese funkzonenübergreifende Zuteilung können beispielsweise im Bereich der Funkzonenränder Kommunikationsverbindungen von/zu der Mobilstation den Basisstationen in unterschiedlichen Funkzonen zugeteilt werden.

Die nachfolgende Beschreibung eines Ausführungsbeispiels der erfindungsgemäßen Einrichtung und des erfindungsgemäßen Verfahrens besitzt lediglich beispielhaften Charakter. Die beschriebenen Merkmale sind nicht zwingend in der dargestellten Art zur Verwirklichung des angestrebten Erfolges erforderlich.

Das Ausführungsbeispiel der Erfindung wird anhand der beigefügten Zeichnungen erläutert.

Es zeigen:
- FIG 1: einen Teil eines Mobilfunksystems mit zwei Konfigurationsmöglichkeiten für die erfindungsgemäße Einrichtung,
- FIG 2: ein Blockschaltbild der erfindungsgemäßen Einrichtung mit den darin verwirklichten Komponenten,
- FIG 3: eine Funkzone mit mehreren Funkzellen unterschiedlicher Größe sowie einer Mobilstation,
- FIG 4: eine Auswahlmatrix für die Mobilstation, und
- FIG 5: eine Ressourcenmatrix für die Funkübertragungskanäle.

Die Erfindung zeigt eine Möglichkeit auf, die Verwaltung und Zuteilung der Funkübertragungskanäle F1 bis F5 in einer Funkzone nach dem Verfahren der dynamischen Kanalzuteilung mittels einer als Funksystem-Steuerung RNC aufzufassenden Einrichtung zu gestalten. Die Bezeichnung Funksystem-Steuerung RNC (Radio Network Controller) ist dabei die logisch-funktionelle Bezeichnung der erfindungsgemäßen Einrichtung. Die Funksystem-Steuerung RNC kann in einer Vermittlungseinrichtung des Mobilfunksystems verwirklicht oder mit einer solchen verbunden sein. In einer Speichereinrichtung SP innerhalb der Funksystem-Steuerung RNC wird zumindest eine Auswahlmatrix CM (Compatibility Matrix) und zumindest eine Ressourcenmatrix RM mit jeweils einem oder mehreren Parametern gespeichert. Mittels einer Steuereinrichtung ST werden die Parameter in der Auswahlmatrix CM ausgewertet und die Funkübertragungskanäle F1 bis F5 an eine oder mehrere Basisstationen BTS1 bis BTS4 für Kommunikationsverbindungen von/zu der Mobilstation zugeteilt. In Abhängigkeit von Veränderungen der Parameter in der Auswahlmatrix CM wird die Zuteilung der Funkübertragungskanäle F1 bis F5 dynamisch verändert. Die Steuereinrichtung ST wertet ebenfalls die Ressourcenmatrix RM aus, in der den Funkübertragungskanälen der jeweilige Zustände frei, zugeteilt, blockiert zugewiesen sind.

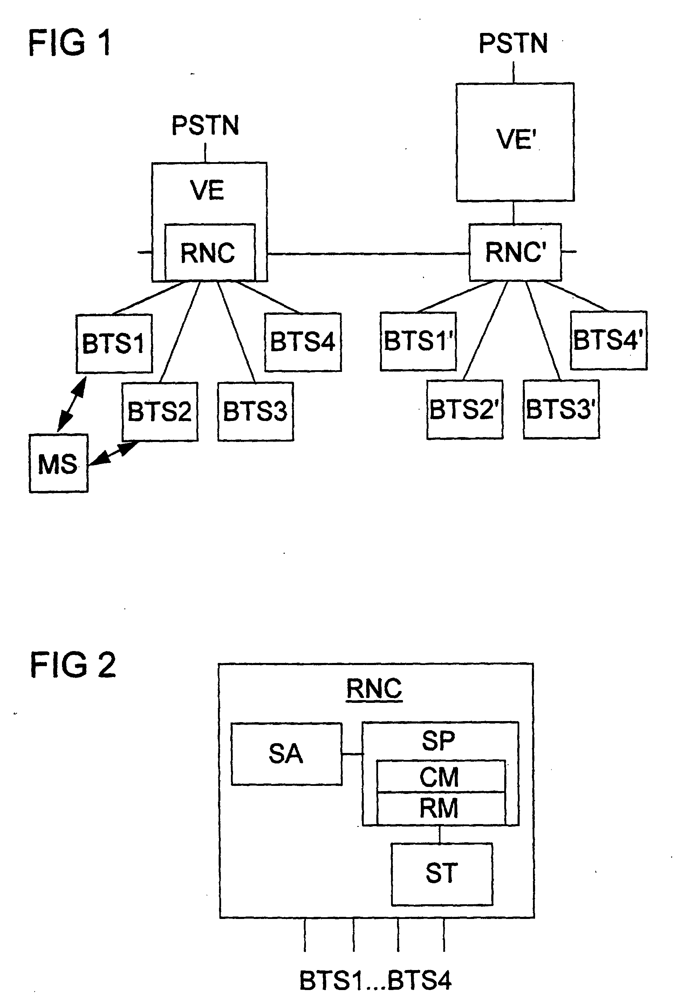

Der in FIG 1 dargestellte Teil eines Mobilfunksystems weist zwei Vermittlungseinrichtungen VE auf, die jeweils den Zugang zu einem Festnetz PSTN herstellen. In einer Vermittlungseinrichtung verwirklicht bzw. mit einer solchen verbunden sind die Funksystem-Steuerungen RNC bzw. RNC', die direkt miteinander verbunden oder durch eine zentrale Vermittlungseinrichtung VE verwaltet werden können. An die Funksystem-Steuerungen sind jeweils mehrere Basisstationen BTS1 bis BTS4 bzw. BTS1' bis BTS4' zur Ausleuchtung jeweils einer Funkzone angeschlossen. Zwischen den Basisstationen BTS1 und BTS2 und der beispielhaft angegebenen Mobilstation MS bestehen Kommunikationsverbindungen. Innerhalb der Funkzone, in der sich die Mobilstation MS befindet, verwaltet die Funksystem-Steuerung RNC die Funkübertragungskanäle F1 bis F5 und teilt diese den Basisstationen BTS1 bis BTS4 zu. Durch die Vernetzung mehrerer Funksystem-Steuerungen RNC können beispielsweise im Rand- und Überlappungsbereich der Funkzonen Kommunikationsverbindungen von/zu der Mobilstation Basisstationen unterschiedliche Funkzonen zugeteilt werden.

FIG 2 zeigt das Blockschaltbild einer Funksystem-Steuerung RNC gemäß der Erfindung. In der Funksystem-Steuerung RNC sind mehrere miteinander verbundene Komponenten verwirklicht. Eine Signalauswerteeinrichtung SA wertet die Übertragungseigenschaften der Funkübertragungskanäle F1 bis F5 zwischen den Basisstationen BTS1 bis BTS4 und der Mobilstation MS aus. Die Übertragungseigenschaften der Funkübertragungskanäle F1 bis F5 können beispielsweise in der bekannten Weise durch Messungen der Empfangssignalstärke RXLEV und der Signalqualität RXQUAL jeweils durch die Mobilstation MS, durch die Basisstationen BTS1 bis BTS4 oder durch die Mobilstation MS und die Basisstationen BTS1 bis BTS4 ermittelt werden. Diese Messungen werden in regelmäßigen oder durch die Übertragungsqualität angeregten Zeitabständen durchgeführt, von den jeweiligen Basisstationen BTS1 bis BTS4 weitergegeben und zentral in der Funksystem-Steuerung RNC zusammengeführt.

In der Speichereinrichtung SP wird zumindest eine Auswahlmatrix CM gespeichert. Dabei besteht die Möglichkeit, für alle in der Funkzone der Funksystem-Steuerung RNC befindlichen Mobilstationen, für jede einzelne Mobilstation oder für beispielsweise mehrere Mobilstationen mit gleichen oder ähnlichen Parametern jeweils eine Auswahlmatrix CM zu speichern und zu verwalten.

In der Speichereinrichtung SP wird weiterhin zumindest eine Ressourcenmatrix RM gespeichert.

Die Steuereinrichtung ST wertet die Auswahlmatrix CM der in der Funkzone befindlichen Mobilstation MS und die Ressourcenmatrix RM aus und teilt die Funkübertragungskanäle F1 bis F5 beispielsweise den Basisstationen BTS1 und BTS2 für die Kommunikationsverbindungen von/zu der Mobilstation MS zu.

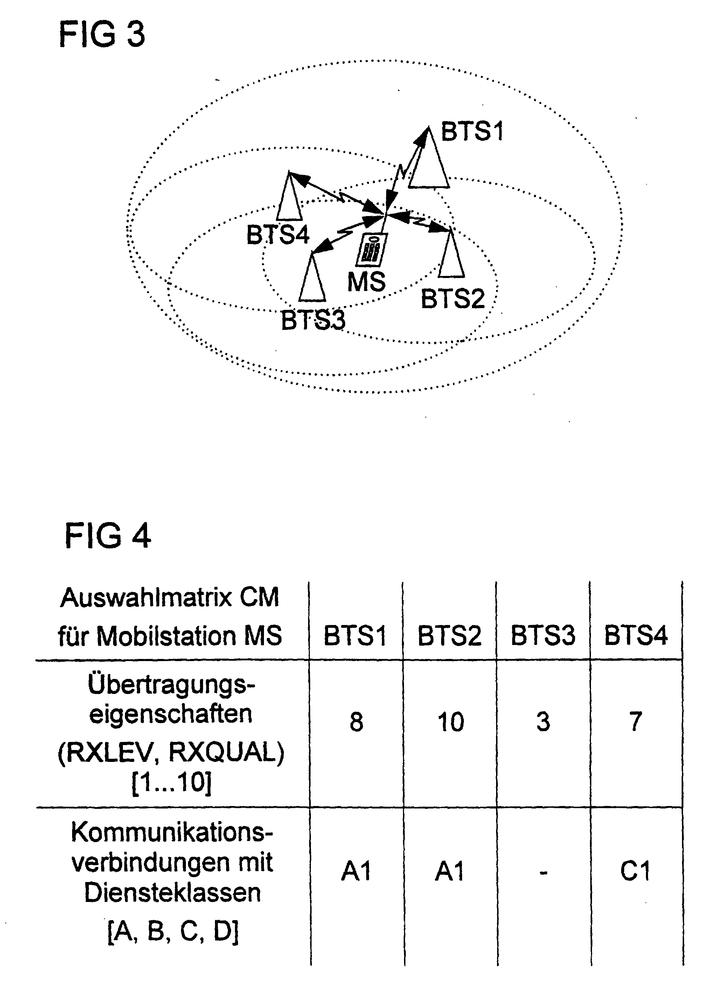

Die FIG 3 zeigt den physikalischen Aufbau einer Funkzone. Die Basisstationen BTS1 bis BTS4 sind mit einer - nicht dargestellten - Funksystem-Steuerung RNC verbunden und bekommen von dieser Funkübertragungskanäle zugeteilt.

Die Basisstationen BTS1 bis BTS4 bilden eine hierarchische Zellstruktur, die dadurch gekennzeichnet ist, daß die Funkzellen unterschiedliche Größen besitzen. So kann es sich bei den Funkzellen der Basisstationen BTS2 bis BTS4 beispielsweise um Mikro- oder Pikozellen und bei der Funkzelle der BTS1 um eine Makrozelle handeln. Die Mikro- bzw. Pikozellen überlappen sich und werden von der Makrozelle der Basisstation BTS1 überlagert. Die Mobilstation MS des mobilen Teilnehmers befindet sich in einem Bereich der Überlappung durch die Funkzellen der vier Basisstationen BTS1 bis BTS4.

In der FIG 4 wird beispielhaft eine Auswahlmatrix für eine Mobilstation MS dargestellt, wie sie in der Speichereinrichtung SP der Funksystem-Steuerung RNC gespeichert sein kann. Die Mobilstation MS befindet sich, wie in FIG 3 dargestellt, in einem Bereich der Überlappung der Funkzellen der zur Funkzone gehörenden Basisstationen BTS1 bis BTS4. Der Teilnehmer möchte zwei Kommunikationsverbindungen aufgebauen. Kommunikationsverbindungen können allgemein aufgrund der Anforderungen an die Übertragung in verschiedene Diensteklassen eingeteilt werden. Die folgende beispielhafte Aufteilung ist sinnvoll.
- Diensteklasse A:: : Verbindung mit konstanter Bitrate, isochrone Sprachübertragung,
- Diensteklasse B:: Verbindung mit variabler Bitrate,
- Diensteklasse C:: Verbindungsorientiertes Paketprotokoll,
- Diensteklasse D:: Paketdatendienst ohne Verbindung.

Diese Dienstklassen lassen sich gegebenenfalls auch in Echtzeit- und Nicht-Echtzeit-Kommunikationsverbindungen einteilen. Daraus folgend sind die Anforderungen an die Übertragungseigenschaften für Echtzeit-Kommunikationsverbindungen wie beispielsweise Sprach- oder Videoübertragung höher als an die Übertragung von Datenpaketen. Eine weitere Unterteilung der Diensteklassen aufgrund zusätzlicher Übertragungsparameter (z.B. Bitfehlerrate, Verzögerungszeit) ist ebenfalls möglich.

Die dargestellte Auswahlmatrix CM für die Mobilstation MS ist folgendermaßen aufgeteilt. In den Spalten werden die von der Funksystem-Steuerung RNC verwalteten Basisstationen BTS1 bis BTS4 eingetragen, denen in den Zeilen die Parameter zugewiesen werden. Die Auswahlmatrix CM muß nicht alle oben aufgeführten Parameter beinhalten, diese werden jedoch in der weiteren Beschreibung ebenfalls näher erläutert.

In der ersten Zeile werden den Basisstationen BTS1 bis BTS4 die von der Signalauswerteeinrichtung SA in einem Bereich von 1...10 bewerteten Übertragungseigenschaften RXLEV und RXQUAL der Funkübertragungskanäle zwischen den Basisstationen BTS1 bis BTS4 und der Mobilstation MS zugewiesen. Bessere Übertragungseigenschaften sind dabei durch eine höhere zahlenmäßige Bewertung offenbart.

Als weiteren Parameter kann die Auswahlmatrix CM die Eigenschaften und Leistungsmerkmale der Mobilstation MS für den Fall der Einteilung der Mobilstationen in verschiedene Mobilstationsklassen beinhalten. Mittels eines Austausch von Statusinformationen werden diese Parameter in die Auswahlmatrix CM eingeschrieben und bei der Zuteilung der Funkübertragungskanäle an die Basisstationen BTS1 bis BTS4 berücksichtigt bzw. es wird festgestellt, ob die Mobilstation MS überhaupt für Kommunikationsverbindungen mit einer parallelen oder sequentiellen Übertragung der Signalkomponenten auf mehreren Funkübertragungskanälen von/zu mehreren Basisstationen BTS1 bis BTS4 geeignet ist.

Eine für die erfindungsgemäße Anwendung vorgesehene Mobilstation MS sollte demnach derart ausgestattet sein, daß sie gleichzeitig oder sequentiell auf mehreren Funkübertragungskanälen empfangen und senden kann

Einen insbesondere bei hierarchischen Zellstrukturen wichtigen Parameter stellt die Verweildauer der Mobilstation MS in den Funkzellen dar. Dieser Parameter ermöglicht es, die Zuteilung der Funkübertragungskanälen zu den Basisstationen so zu gestalten, daß beispielsweise eine sich schnell bewegende Mobilstation MS nicht von den Basisstationen BTS2 bis BTS4 mit Mikro- oder Pikozellen, sondern von der Basisstation BTS1 mit Makrozelle versorgt wird, um ein häufiges Hand-Over zwischen den Funkzellen zu vermeiden.

In der zweiten Zeile der beispielhaft dargestellten Auswahlmatrix CM werden den Basisstationen BTS1 bis BTS4 in Abhängigkeit von den Parametern die Kommunikationsverbindungen mit ihren Diensteklassen [A, B, C, D] durch die Steuereinrichtung ST zugeteilt.

Als Beispiel für den erfindungsgemäßen Ablauf der Zuteilung der Funkübertragungskanälen wird der einfache Fall dargestellt, bei dem in der Auswahlmatrix CM nur der Parameter der Übertragungseigenschaften berücksichtigt wird. Der mobile Teilnehmer möchte mit seiner Mobilstation MS gleichzeitig ein Telephongespräch (Sprachübertragung - Diensteklasse A) und eine Internetsitzung (Paketdaten - Diensteklasse C), nachfolgend als Kommunikationsverbindungen A1 und C1 bezeichnet, führen. Die Übertragungseigenschaften RXLEV und RXQUAL auf der Funkschnittstelle zwischen den Basisstationen BTS1 bis BTS4 und der Mobilstation MS werden in der beschriebenen Weise gemessen, von der Signalauswerteeinrichtung SA in der Funksystem-Steuerung RNC bewertet und in die für die Mobilstation MS gespeicherte Auswahlmatrix CM eingeschrieben. Aus der ersten Zeile der Auswahlmatrix CM läßt sich erkennen, daß sehr gute bzw. gute Übertragungseigenschaften zwischen der Mobilstation MS und den Basisstationen BTS1 und BTS2 bestehen. Die Übertragungseigenschaften zu der Basisstation BTS3 wird als ungenügend und zu der BTS4 als ausreichend bewertet. Aus dieser Bewertung werden die folgenden Basisstationen zur Übertragung der beiden Kommunikationsverbindungen A1 und C1 bestimmt:
- Telephongespräch A1 → BTS1 und BTS2,
- Internetsitzung C1 → BTS4.

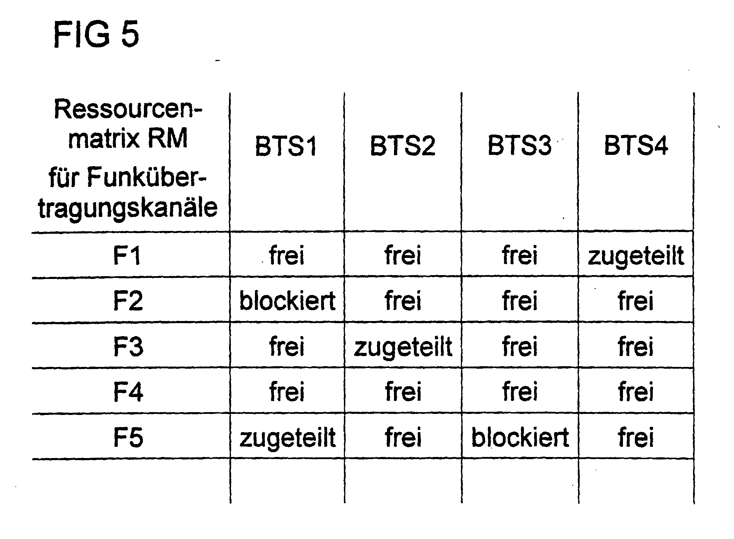

Den jeweiligen Basisstationen werden daraufhin die Funkübertragungskanäle zur Übertragung der Kommunikationsverbindungen A1 und C1 von der Steuereinrichtung ST in der Funksystem-Steuerung RNC zugeteilt. Die Auswahl der Funkübertragungskanäle erfolgt durch Auswerten der Parameter in der Ressourcenmatrix RM, wie sie beispielhaft in der FIG 5 dargestellt ist. In den Spalten der Ressourcenmatrix RM werden die von der Funksystem-Steuerung RNC verwalteten Basisstationen BTS1 bis BTS4 eingetragen, denen in den Zeilen die Funkübertragungskanäle F1 bis F5 zugeordnet sind. In den Schnittpunkten der Matrix sind die Zustände der Funkübertragungskanäle eingetragen, welche durch Statusinformationen wie beispielsweise frei, zugeteilt oder blockiert (aufgrund von Interferenz) repräsentiert sind. Die Steuereinrichtung ST wählt aus der Anzahl der freien Funkübertragungskanäle unter Berücksichtigung der Interferenzbedingungen für die Basisstationen BTS1, BTS2 und BTS4 jeweils einen Funkübertragungskanal aus. Die ausgewählten Funkübertragungskanäle sind in der FIG 5 jeweils durch die Statusinformation "zugeteilt" dargestellt. Zur Abschätzung der Interferenz werden die in der Auswahlmatrix CM eingetragenen Übertragungseigenschaften zwischen den Basisstationen BTS1 bis BTS4 und der Mobilstation MS verwendet, die einen Rückschluß auf die Gleichkanalstörungen zulassen.

Mit der Veränderung des Aufenthaltsortes der Mobilstation MS und den sich dadurch verändernden Übertragungseigenschaften zwischen der Mobilstation MS und den Basisstationen BTS1 bis BTS4 sowie den Auf- und Abbau von Kommunikationsverbindungen kann sich die Auswahlmatrix CM sowie die Ressourcenmatrix RM und damit die Auswahl der Basisstationen BTS1 bis BTS4 zur Übertragung der Kommunikationsverbindungen fortlaufend ändern.

Neben dieser beispielhaften Zuteilung von zwei Kommunikationsverbindungen A1 und C1 an die Basisstationen BTS1, BTS2 und BTS4 gibt es für den jeweiligen Fall weitere Möglichkeiten der optimalen Zuteilung der Funkübertragungskanäle F1 bis F5. Abhängig von den Übertragungseigenschaften können diese an eine oder mehrere Basisstationen verteilt werden. Für den Fall des Auftretens einer asymmetrischen Kommunikationsverbindung - beispielsweise der Diensteklasse D (Paketdatendienst) - besteht die Möglichkeit, daß diese unterschiedlichen Funkübertragungskanälen für die Abwärtsrichtung (BTS → MS) und die Aufwärtsrichtung (MS → BTS) von mehreren Basisstationen (BTS1...) zugewiesen wird. Weiterführend ist es ebenfalls sinnvoll, mehrere Mobilstationen mit beispielsweise Kommunikationsverbindungen gleicher Diensteklassen in einer zentralen Auswahlmatrix CM zusammenzufassen und die Funkübertragungskanälen zentral den Basisstationen BTS1 bis BTS4 zuzuteilen.

## Patentansprüche

1. Einrichtung (RNC, RNC') zur Verwaltung und Zuteilung von Funkübertragungskanälen (F1...) zu zumindest einer Kommunikationsverbindung in einer Funkzone eines Mobilfunksystems, das neben der Einrichtung (RNC, RNC')
- zumindest zwei mit der Einrichtung (RNC, RNC') verbundene Basisstationen (BTS1...), die jeweils eine Funkzelle mit funktechnischen Resourcen versorgen und deren Funkzellen sich überlappen, und
- zumindest eine Mobilstation (MS), die sich in der Funkzone der Einrichtung (RNC, RNC') befindet, aufweist,
**gekennzeichnet durch**
- eine Signalauswerteeinrichtung (SA) zum Bestimmen von Übertragungseigenschaften (RXLEV, RXQUAL) zwischen der Mobilstation (MS) und den Basisstationen (BTS1...),
- eine Speichereinrichtung (SP)
- zum Speichern der bestimmten Übertragungseigenschaften (RXLEV, RXQUAL) als Parameter in zumindest einer Auswahlmatrix (CM),. wobei die bestimmten Übertragungseigenschaften (RXLEV, RXQUAL) der jeweiligen Basisstation (BTS1...) zugeordnet werden, und zum Speichern einer Diensteklasse (A, B, C, D) der Kommunikationsverbindung als Parameter, und
- zum Verwalten der in der Funkzone der Einrichtung (RNC, RNC') zuteilbaren Funkübertragungskanäle (F1...) als Parameter in zumindest einer Resourcenmatrix (RM),
- eine Steuereinrichtung (ST) zum Auswerten der gespeicherten Parameter in der Auswahlmatrix (CM) und zum Zuteilen zumindest eines Funkübertragungskanals (F1...) sowie zumindest einer Basisstation (BTS1...) zu der Kommunikationsverbindung von/zu der Mobilstation (MS).

2. Einrichtung (RNC, RNC') nach einem der vorhergehenden Ansprüche, **dadurch gekennzeichnet, daß**
für jede Mobilstation (MS) in der Funkzone eine gesonderte Auswahlmatrix (CM) gespeichert ist.

3. Einrichtung (RNC, RNC') nach einem der vorhergehenden Ansprüche, **dadurch gekennzeichnet, daß**
in der Auswahlmatrix (CM) zusätzlich als Parameter Eigenschaften und Leistungsmerkmale der Mobilstation (MS) gespeichert sind, und für die Zuteilung der Funkübertragungskanäle (F1...) und Basisstationen (BTS1...) berücksichtigt werden.

4. Einrichtung (RNC, RNC') nach einem der vorhergehenden Ansprüche, **dadurch gekennzeichnet, daß**
in der Auswahlmatrix (CM) zusätzlich als Parameter eine Verweildauer der Mobilstation (MS) in den Funkzellen der Basisstationen (BTS1...) gespeichert ist, und für die Zuteilung der Funkübertragungskanäle (F1...) und Basisstationen (BTS1...) berücksichtigt wird.

5. Einrichtung (RNC, RNC') nach einem der vorhergehenden Ansprüche, **dadurch gekennzeichnet, daß**
in der Resourcenmatrix (RM) als Parameter die zuteilbaren Funkübertragungskanäle (F1...) mit jeweiligen Zuständen (frei, zugeteilt, blockiert) gespeichert sind, und für die Zuteilung der Funkübertragungskanäle (F1...) zu der Kommunikationsverbindung berücksichtigt werden.

6. Einrichtung (RNC, RNC') nach einem der vorhergehenden Ansprüche, **dadurch gekennzeichnet, daß**
sie in einer Vermittlungseinrichtung (VE) des Mobilfunksystems verwirklicht ist.

7. Einrichtung (RNC, KNC') nach einem der Ansprüche 1 bis 5,
**dadurch gekennzeichnet, daß**
sie als eigenständige Komponente des Mobilfunksystems verwirklicht und mit einer Vermittlungseinrichtung (VE, VE') verbunden ist.

8. Einrichtung (RNC, RNC') nach einem der vorhergehenden Ansprüche, **dadurch gekennzeichnet, daß**
sie mehrfach im Mobilfunksystem angeordnet und zumindest mit einer weiteren Einrichtung (RNC, RNC') verbunden ist.

9. Verfahren zur Verwaltung und Zuteilung von Funkübertragungskanälen (F1...) zu zumindest einer Kommunikationsverbindung in einer Funkzone eines Mobilfunksystems, wobei das Mobilfunksystem
- zumindest eine Einrichtung (RNC, RNC') zur Verwaltung und Zuteilung der Funkübertragungskanäle (F1...),
- zumindest zwei mit dieser Einrichtung (RNC, RNC') verbundene Basisstationen (BTS1...), die jeweils eine Funkzelle mit funktechnischen Resourcen versorgen und deren Funkzellen sich überlappen, sowie
- zumindest eine Mobilstation (MS), die sich in der Funkzone der Einrichtung (RNC, RNC') befindet, aufweist,
**dadurch gekennzeichnet, daß**
- Übertragungseigenschaften (RXLEV, RXQUAL) zwischen der Mobilstation (MS) und den Basisstationen (BTS1...) bestimmt und ausgewertet werden,
- die bestimmten Übertragungseigenschaften (RXLEV, RXQUAL) als Parameter in einer Auswahlmatrix (CM) gespeichert werden, wobei die bestimmten Übertragungseigenschaften (RXLEV, RXQUAL) der jeweiligen Basisstation (BTS1...) zugeordnet werden,
- in der Auswahlmatrix (CM) zusätzlich als Parameter eine Diensteklasse (A, B, C, D) der Kommunikationsverbindung gespeichert wird,
- von der Einrichtung (RNC, RNC') abhängig von einer Auswertung der gespeicherten Parameter in der Auswahlmatrix (CM) zumindest ein Funkübertragungskanal (F1...) sowie zumindest eine Basisstation (BTS1...) der Kommunikationsverbindung von/zu der Mobilstation (MS) zugeteilt wird, wobei die in der Funkzone der Einrichtung (RNC, RNC') zuteilbaren Funkübertragungskanäle (F1...) in einer Resourcenmatrix (RM) verwaltet werden.

10. Verfahren nach Anspruch 9,
**dadurch gekennzeichnet, daß**
die Übertragungseigenschaften (RXLEV, RXQUAL) von der Mobilstation (MS) und/oder von der jeweiligen Basisstation (BTS1...) bestimmt werden.

11. Verfahren nach Anspruch 9 oder 10,
**dadurch gekennzeichnet, daß**
die Parameter in der Auswahlmatrix (CM) und/oder in der Resourcenmatrix (RM) zyklisch durch eine Signalauswerteeinrichtung (SA) aktualisiert werden.

12. Verfahren nach einem der Ansprüche 9 bis 11,
**dadurch gekennzeichnet, daß**
von der Einrichtung (RNC, RNC') Funkübertragungskanäle (F1...) und Basisstationen (BTS1...) ausgewählt werden, die beste Übertragungseigenschaften (RXLEV, RXQUAL) für die Kommunikationsverbindung von/zu der Mobilstation (MS) sicherstellen.

13. Verfahren nach einem der Ansprüche 9 bis 12,
**dadurch gekennzeichnet, daß**
in Abhängigkeit von Veränderungen der Parameter in der Auswahlmatrix (CM) eine neue Zuteilung der Funkübertragungskanäle (F1...) und eine neue Auswahl der Basisstationen (BTS...) für die Kommunikationsverbindung von/zu der Mobilstation (MS) initiiert wird.

14. Verfahren nach einem der Ansprüche 9 bis 13,
**dadurch gekennzeichnet, daß**
eine Anzahl von Basisstationen (BTS1...) für die Kommunikationsverbindung von/zu der Mobilstation (MS) abhängig von Anforderungen der jeweiligen Diensteklasse (A, B, C, D) an Übertragungseigenschaften (RXLEV, RXQUAL) gewählt wird.

15. Verfahren nach einem der Ansprüche 9 bis 14,
**dadurch gekennzeichnet, daß**
die Anzahl der Basisstationen (BTS1...) für die Kommunikationsverbindungen von/zu der Mobilstation (MS) abhängig von einem aktuellen Aufenthaltsort der Mobilstation (MS) gewählt wird.

16. Verfahren nach einem der Ansprüche 9 bis 15,
**dadurch gekennzeichnet, daß**
bei einer hierarchischen Funkzellstruktur für jede Funkzellebene eine jeweilige Anzahl von Basisstationen (BTS1...) für die Kommunikationsverbindung von/zu der Mobilstation (MS) gewählt wird.

17. Verfahren nach Anspruch 16,
**dadurch gekennzeichnet, daß**
die Anzahl der Basisstationen (BTS1...) für die Kommunikationsverbindung von/zu der Mobilstation (MS) abhängig von einer Verweildauer der Mobilstation (MS) in einer Funkzelle gewählt wird.

18. Verfahren nach einem der Ansprüche 9 bis 17,
**dadurch gekennzeichnet, daß**
der Kommunikationsverbindung einer Diensteklasse (A, B, C, D) Funkübertragungskanäle (F1...) einer Basisstation (BTS1...) zugeteilt werden.

19. Verfahren nach einem der Ansprüche 9 bis 17,
**dadurch gekennzeichnet, daß**
der Kommunikationsverbindung einer Diensteklasse (A, B, C, D) Funkübertragungskanäle (F1...) mehrerer Basisstationen BTS1...) zugeteilt werden.

20. Verfahren nach einem der Ansprüche 9 bis 17,
**dadurch gekennzeichnet, daß**
zumindest zwei Kommunikationsverbindungen unterschiedlicher Diensteklassen (A, B, C, D) Funkübertragungskanäle (F1...)
einer Basisstation (BTS1...) zugeteilt werden.

21. Verfahren nach einem der Ansprüche 9 bis 17,
**dadurch gekennzeichnet, daß**
zumindest zwei Kommunikationsverbindungen unterschiedlicher Diensteklassen (A, B, C, D) Funkübertragungskanäle (F1...) mehrerer Basisstationen (BTS1...) zugeteilt werden.

22. Verfahren nach Anspruch 20 oder 21,
**dadurch gekennzeichnet, daß**
für die Diensteklassen (A, B, C, D) jeweils Funkübertragungskanäle (F1...) mehrerer Basisstationen (BTS1...) zugeteilt werden.

23. Verfahren nach einem der Ansprüche 9 bis 17,
**dadurch gekennzeichnet, daß**
einer asymmetrischen Kommunikationsverbindung in Abwärtsrichtung von den Basisstationen (BTS1...) zur Mobilstation (MS) und in Aufwärtsrichtung von der Mobilstation (MS) zu den Basisstationen (BTS1...) jeweils Funkübertragungskanäle (F1...) mehrerer Basisstationen (BTS1...) zugeteilt werden.

24. Verfahren nach Anspruch 23,
**dadurch gekennzeichnet, daß**
für die Aufwärtsrichtung und für die Abwärtsrichtung jeweils Funkübertragungskanäle (F1...) unterschiedlicher Basisstationen (BTS1...) zugeteilt werden.

25. Verfahren nach einem der Ansprüche 9 bis 17,
**dadurch gekennzeichnet, daß**
signalkomponenten einer in mehrere Signalkomponenten aufgeteilten Kommunikationsverbindung unterschiedlichen Funkübertragungskanälen (F1...) mehrerer Basisstationen (BTS1...) zugewiesen werden.

26. Verfahren nach Anspruch 25,
**dadurch gekennzeichnet, daß**
die Signalkomponenten der Kommunikationsverbindung sequentiell unterschiedlichen Funkübertragungskanälen (F1...) mehrerer Basisstationen (BTS1...) zugewiesen werden.

27. Verfahren nach Anspruch 25,
**dadurch gekennzeichnet, daß**
die Signalkomponenten der Kommunikationsverbindung parallel unterschiedlichen Funkübertragungskanälen (F1...) mehrerer Basisstationen (BTS1...) zugewiesen werden.

28. Verfahren nach einem der Ansprüche 9 bis 27,
**dadurch gekennzeichnet, daß**
die Parameter mehrerer Mobilstationen (MS) mit gleichen Übertragungseigenschaften (RXLEV, RXQUAL) in einer gemeinsamen Auswahlmatrix (CM) verwaltet werden.

29. Verfahren nach einem der Ansprüche 9 bis 28,
**dadurch gekennzeichnet, daß**
die Parameter mehrerer Mobilstationen (MS) mit Kommunikationsverbindungen gleicher Diensteklassen (A, B, C, D) in einer gemeinsamen Auswahlmatrix (CM) verwaltet werden.

## Claims

1. Device (RNC, RNC') for administering and assigning radio transmission channels (F1...) to at least one communications link in a radio zone of a mobile radio network which, in addition to the device (RNC, RNC'), has
- at least two base stations (BTS1...) which are connected to a device (RNC, RNC'), which each supply a radio cell with radio resources and whose radio cells overlap, and
- at least one mobile station (MS) which is located in the radio zone of the device (RNC, RNC'),
**characterized by**
- a signal evaluation device (SA) for determining transmission properties (RXLEV, RXQUAL) between the mobile station (MS) and the base stations (BTS1...),
- a memory device (SP)
- for storing the specific transmission properties (RXLEV, RXQUAL) as parameters in at least one selection matrix (CM), the specific transmission properties (RXLEV, RXQUAL) being assigned to the respective base station (BTS1...), and for storing a service class (A, B, C, D) of the communications link as a parameter, and
- for administering the radio transmission channels (F1...), which can be assigned to the device (RNC, RNC') in the radio zone, as parameters in at least one resource matrix (RM),
- a control device (ST) for evaluating the stored parameters in the selection matrix (CM) and for assigning at least one radio transmission channel (F1...) and at least one base station (BTS1...) to the communications link from/to the base station (MS).

2. Device (RNC, RNC') according to one of the preceding claims, **characterized in that** a separate selection matrix (CM) is stored for each mobile station (MS).

3. Device (RNC, RNC') according to one of the preceding claims, **characterized in that** properties and performance features of the mobile station (MS) are additionally stored as parameters in the selection matrix (CM), and are taken into account for the assignment of the radio transmission channels (F1...) and base stations (BTS1...).

4. Device (RNC, RNC') according to one of the preceding claims, **characterized in that** the period for which the mobile station (MS) is located in the radio cells of the base stations (BTS1...) is additionally stored as a parameter in the selection matrix (CM) and is taken into account for the assignment of the radio transmission channels (F1...) and the base stations (BTS1...).

5. Device (RNC, RNC') according to one of the preceding claims, **characterized in that** the radio transmission channels (F1...) which can be assigned are stored as parameters with respective states (free, assigned, blocked) in the resource matrix (RM), and are taken into account for the assignment of the radio transmission channels (F1...) to the communications link.

6. Device (RNC, RNC') according to one of the preceding claims, **characterized in that** it is implemented in a switching device (VE) of the mobile radio network.

7. Device (RNC, RNC') according to one of Claims 1 to 5, **characterized in that** it is implemented as a stand-alone component of the mobile radio network and is connected to a switching device (VE, VE').

8. Device (RNC, RNC') according to one of the preceding claims, **characterized in that** a plurality of this device is arranged in the mobile radio network and is connected to at least one further device (RNC, RNC').

9. Method for administering and assigning radio transmission channels (F1...) to at least one communications link in a radio zone of a mobile radio network, the mobile radio network having
- at least one device (RNC, RNC') for administering and assigning the radio transmission channels (F1...),
- at least two base stations (BTS1...) which are connected to this device (RNC, RNC'), which each supply a radio cell with radio resources and whose radio cells overlap, and
- at least mobile station (MS) which is located in the radio zone of the device (RNC, RNC'),
**characterized in that**
- transmission properties (RXLEV, RXQUAL) between the mobile station (MS) and the base stations (BTS1...) are determined and evaluated,
- the transmission properties (RXLEV, RXQUAL) which are determined are stored as parameters in a selection matrix (CM), the transmission properties (RXLEV, RXQUAL) which are determined being assigned to the respective base station (BTS1...),
- a service class (A, B, C, D) of the communications link is additionally stored as a parameter in the selection matrix (CM), the device (RNC, RNC') assigns at least one radio transmission channel (F1...) and at least one base station (BTS1...) of the communications link from/to the mobile station (MS) as a function of an evaluation of the stored parameters in the selection matrix (CM), the radio transmission channels (F1...) which can be assigned in the radio zone of the device (RNC, RNC') being administered in a resource matrix (RM).

10. Method according to Claim 9, **characterized in that** the transmission properties (RXLEV, RXQUAL) are determined by the mobile station (MS) and/or by the respective base station (BTS1...).

11. Method according to Claim 9 or 10, **characterized in that** the parameters in the selection matrix (CM) and/or in the resource matrix (RM) are updated cyclically by means of a signal evaluation device (SA).

12. Method according to one of Claims 9 to 11,
**characterized in that** the device (RNC, RNC') selects radio transmission channels (F1...) and base stations (BTS1...) which ensure optimum transmission properties (RXLEV, RXQUAL) for the communications link from/to the mobile station (MS).

13. Method according to one of Claims 9 to 12,
**characterized in that** a new assignment of the radio transmission channels (F1...) and a new selection of the base stations (BTS1...) for the communications link from/to the mobile station (MS) are initiated as a function of changes in the parameters in the selection matrix (CM).

14. Method according to one of Claims 9 to 13,
**characterized in that** a number of base stations (BTS1...) for the communications link from/to the mobile station (MS) is selected as a function of the requirements of the respective service class (A, B, C, D) in terms of transmission properties (RXLEV, RXQUAL).

15. Method according to one of Claims 9 to 14,
**characterized in that** the number of base stations (BTS1...) for the communications links from/to the mobile station (MS) is selected as a function of a current location of the mobile station (MS).

16. Method according to one of Claims 9 to 15,
**characterized in that** when there is a hierarchical radio cell structure for each radio cell level, a respective number of base stations (BTS1...) is selected for the communications link from/to the mobile station (MS).

17. Method according to Claim 16, **characterized in that** the number of base stations (BTS1...) for the communications link from/to the mobile station (MS) is selected as a function of a period for which the mobile station (MS) is located in a radio cell.

18. Method according to one of Claims 9 to 17,
**characterized in that** the radio transmission channels (F1...) of one base station (BTS1...) are assigned to one communications link of one service class (A, B, C, D).

19. Method according to one of Claims 9 to 17,
**characterized in that** radio transmission channels (F1...) of a plurality of base stations are assigned to the communications link of one service class (A, B, C, D).

20. Method according to one of Claims 9 to 17,
**characterized in that** radio transmission channels (F1...) of one base station (BTS1...) are assigned to at least two communications links of different service classes (A, B, C, D).

21. Method according to one of Claims 9 to 17,
**characterized in that** radio transmission channels (F1...) of a plurality of base stations (BTS1...) are assigned to at least two communications links of different service classes (A, B, C, D).

22. Method according to Claim 20 or 21, **characterized in that** radio transmission channels (F1...) of a plurality of base stations (BTS1...) are respectively assigned for the service classes (A, B, C, D).

23. Method according to one of Claims 9 to 17,
**characterized in that** radio transmission channels (F1...) of a plurality of base stations (BTS1...) are respectively assigned to an asymmetrical communications link in the downlink direction from the base stations (BTS1...) to the mobile station (MS) and in the uplink direction from the mobile station (MS) to the base stations (BTS1...).

24. Method according to Claim 23, **characterized in that** radio transmission channels (F1...) of different base stations (BTS1...) are respectively assigned for the uplink direction and for the downlink direction.

25. Method according to one of Claims 9 to 17,
**characterized in that** signal components of a communications link which is divided up into a plurality of signal components are assigned to different radio transmission channels (F1...) of a plurality of base stations (BTS1...).

26. Method according to Claim 25, **characterized in that** the signal components of the communications link are assigned sequentially to different radio transmission channels (F1...) of a plurality of base stations (BTS1...).

27. Method according to Claim 25, **characterized in that** the signal components of the communications link are assigned in parallel to different transmission channels (F1...) of a plurality of base stations (BTS1...).

28. Method according to one of Claims 9 to 27,
**characterized in that** the parameters of a plurality of mobile stations (MS) with the same transmission properties (RXLEV, RXQUAL) are administered in a common selection matrix (CM).

29. Method according to one of Claims 9 to 28,
**characterized in that** the parameters of a plurality of mobile stations (MS) with communications links of identical service classes (A, B, C, D) are administered in a common selection matrix (CM).

## Revendications

1. Dispositif (RNC, RNC') de gestion et d'affectation de voie (F1...) de radiotransmission à au moins une liaison de communication dans une zone de radiotéléphonie d'un système de radiotéléphonie mobile, qui comporte, outre le dispositif (RN, RNC')
- au moins deux stations (BTS1...) de base qui sont reliées au dispositif (RNC, RNC'), qui alimentent respectivement une cellule de radiotéléphonie en ressource de la technique radio et dont les cellules de radiotéléphonie se recouvrent, et
- au moins une station (MS) mobile qui se trouve dans la zone de radiotéléphonie du dispositif (RNC, RNC'),
**caractérisé par**
- un dispositif (SA) d'exploitation de signaux pour déterminer des propriétés (RXLEV, RXQUAL) de transmission entre la station (MS) mobile et les stations (BTS1...) de base,
- un dispositif (SP) de mémorisation,
- pour la mise en mémoire des propriétés (RXLEV, RXQUAL) de transmission déterminées, comme paramètre dans au moins une matrice (CM) de sélection, les propriétés (RXLEV, RXQUAL) de transmission déterminées étant associées à la station (BTS1...) de base associée, et pour la mise en mémoire d'une classe (A, B, C, D) de service de la liaison de communication comme paramètre, et
- pour la gestion des voies (F1...) de radiotransmission, pouvant être affectées dans la zone de radiotéléphonie du dispositif (RNC, RNC'), comme paramètre dans au moins une matrice (RM) de ressource,
- un dispositif (ST) de commande pour exploiter les paramètres mis en mémoire dans la matrice (CM) de sélection et pour affecter au moins une voie (F1...) de radiotransmission ainsi qu'au moins une station (BTS1) de base à la liaison de communication depuis/vers la station (MS) mobile.

2. Dispositif (RNC, RNC') suivant l'une des revendications précédentes, **caractérisé en ce qu'**il est mis en mémoire pour chaque station (MS) mobile dans la zone de radiotéléphonie une matrice (CM) de sélection distincte.

3. Dispositif (RNC, RNC') suivant l'une des revendications précédentes, **caractérisé en ce qu'**il est mis en mémoire dans la matrice (CM) de sélection en plus comme paramètre des propriétés et des facilités offertes aux usagers de la station (MS) mobile et **en ce qu'**il en est tenu compte pour l'affectation des voies (F1...) de radiotransmission et des stations (BTS1...) de base.

4. Dispositif (RNC, RNC') suivant l'une des revendications précédentes, **caractérisé en ce qu'**il est mis en mémoire dans la matrice (CM) de sélection de plus comme paramètre une durée de séjour de la station (MS) mobile dans des cellules de radiotéléphonie des stations (BTS1...) de base et **en ce qu'**il en est tenu compte pour l'affectation des voies (F1...) de radiotransmission et des stations (BTS1...) de base.

5. Dispositif (RNC, RNC') suivant l'une des revendications précédentes, **caractérisé en ce qu'**il est mis en mémoire dans la matrice (RM) de ressource comme paramètre des voies (F1...) de radiotransmission pouvant être affectées et ayant des états associés (libres, affectés, bloqués) et **en ce qu'**il en est tenu compte pour l'affectation des voies (F1...) de radiotransmission à la liaison de communication.

6. Dispositif (RNC, RNC') suivant l'une des revendications précédentes, **caractérisé en ce qu'**il est réalisé dans un dispositif (VE) de commutation du système de radiotéléphonie mobile.

7. Dispositif (RNC, RNC') suivant l'une des revendications 1 à 5,
**caractérisé en ce qu'**il est réalisé comme composant propre du système de radiotéléphonie mobile et **en ce qu'**il est relié à un dispositif (VE, VE') de commutation.

8. Dispositif (RNC, RNC') suivant l'une des revendications précédentes, **caractérisé en ce qu'**il est monté plusieurs fois dans le système de radiotéléphonie mobile et **en ce qu'**il est relié au moins à un dispositif (RNC, RNC') supplémentaire.

9. Procédé de gestion et d'application de voies (F1...) de radiotransmission à au moins une liaison de communication dans une zone de radiotéléphonie d'un système de radiotéléphonie mobile, le système de radiotéléphonie mobile comportant
- au moins un dispositif (RNC, RNC') pour la gestion et l'affectation des voies (F1...) de radiotransmission,
- au moins deux stations (BTS1...) de base qui sont reliées à ce dispositif (RNC, RNC'), qui alimentent respectivement une cellule de radiotéléphonie en ressource de la technique radio et dont les cellules de radiotéléphonie se recouvrent, ainsi que
- au moins une station (MS) mobile qui se trouve dans la zone de radiotéléphonie du dispositif (RNC, RNC'),
**caractérisé en ce que**
- des propriétés (RXLEV, RXQUAL) de transmission entre la station (MS) mobile et les stations (BTS1...) de base sont déterminées et exploitées,
- les propriétés (RXLEV, RXQUAL) de transmission déterminées sont mises en mémoire comme paramètre dans une matrice (CM) de sélection, les propriétés (RXLEV, RXQUAL) de transmission déterminées étant associées aux stations (BTS1...) de base associées,
- il est mis en mémoire dans la matrice (CM) de sélection de plus comme paramètre une classe (A, B, C, D) de service de la liaison de communication,
- au moins une voie (F1...) de radiotransmission ainsi qu'au moins une station (BTS1...) de base sont affectées à la liaison de communication depuis/vers la station (MS) mobile par le dispositif (RNC, RNC') en fonction d'une exploitation des paramètres mis en mémoire dans la matrice (CM) de sélection, les voies (F1...) de radiotransmission pouvant être affectées dans la zone de radiotéléphonie du dispositif (RNC, RNC') étant gérées dans une matrice (RM) de ressource.

10. Procédé suivant la revendication 9, **caractérisé en ce que** les propriétés (RXLEV, RXQUAL) de transmission sont déterminées par la station (MS) mobile et/ou par la station (BTS1...) de base associée.

11. Procédé suivant la revendication 9 ou 10, **caractérisé en ce que** les paramètres dans la matrice (CM) de sélection et/ou dans la matrice (RM) de ressource sont mis à jour de manière cyclique par un dispositif (SA) d'exploitation de signaux.

12. Procédé suivant l'une des revendications 9 à 11, **caractérisé en ce qu'**il est sélectionné par le dispositif (RNC, RNC') des voies (F1...) de radiotransmission et des stations (BTS1...) de base qui assurent les meilleures propriétés (RXLEV, RXQUAL) de transmission pour la liaison de communication depuis/vers la station (MS) mobile.

13. Procédé suivant l'une des revendications 9 à 12, **caractérisé en ce que**, en fonction de changements des paramètres dans la matrice (CM). de sélection, il est initié une nouvelle affectation des voies (F1...) de radiotransmission et une nouvelle sélection des stations (BTS...) de base pour la liaison de communication depuis/vers la station (MS) mobile.

14. Procédé suivant l'une des revendications 9 à 13, **caractérisé en ce qu'**un nombre des stations (BTS1...) de base pour la liaison de communication depuis/vers la station (MS) mobile est choisi en fonction d'exigences des classes (A, B, C, D) de service associé en matière de propriétés (RXLEV, RXQUAL) de transmission

15. Procédé suivant l'une des revendications 9 à 14, **caractérisé en ce que** le nombre des stations (BTS1...) de base pour les liaisons de communication depuis/vers la station (MS) mobile est choisi en fonction d'un lieu de séjour instantané de la station (MS) mobile.

16. Procédé suivant l'une des revendications 9 à 15, **caractérisé en ce que**, pour une structure de cellule de radiotéléphonie hiérarchique, on choisit pour chaque niveau de cellule de radiotéléphonie un nombre associé de stations (BTS1...) de base pour la liaison de communication depuis/vers la station (MS) mobile.

17. Procédé suivant la revendication 16, **caractérisé en ce que** le nombre des stations (BTS1...) de base pour la liaison de communication depuis/vers la station (MS) mobile est choisi en fonction d'une durée de séjour de la station (MS) mobile dans une cellule de radiotéléphonie.

18. Procédé suivant l'une des revendications 9 à 17, **caractérisé en ce qu'**il est affecté à la liaison de communication d'une classe (A, B, C, D) de service des voies (F1...) de radiotransmission d'une station (BTS1...) de base.

19. Procédé suivant l'une des revendications 9 à 17, **caractérisé en ce qu'**il est affecté à la liaison de communication d'une classe (A, B, C, D) de service des voies (F1...) de radiotransmission de plusieurs stations (BTS1...) de base.

20. Procédé suivant l'une des revendications 9 à 17, **caractérisé en ce qu'**il est affecté à au moins deux liaisons de communication de classe (A, B, C, D) de service différentes des voies (F1...) de transistor d'une station (BTS1...) de base.

21. Procédé suivant l'une des revendications 9 à 17, **caractérisé en ce qu'**il est affecté à au moins deux liaisons de communication de classe (A, B, C, D) de service différentes des voies (F1...) de radiotransmission de plusieurs stations (BTS1...) de base.

22. Procédé suivant la revendication 20 ou 21, **caractérisé en ce que**, pour les classes (A, B, C, D) de service, il est affecté respectivement des voies (F1...) de transmission de plusieurs stations (BTS1...) de base.

23. Procédé suivant l'une des revendications 9 à 17, **caractérisé en ce qu'**il est affecté à une liaison de communication asymétrique dans la direction descendante des stations (BTS1...) de base vers la station (MS) mobile et dans la direction ascendante de la station (MS) mobile vers les stations (BTS1...) de base respectivement des voies (F1...) de radiotransmission de plusieurs stations (BTS1...) de base.

24. Procédé suivant la revendication 23, **caractérisé en ce qu'**il est affecté pour la direction montante et pour la direction descendante respectivement des voies (F1...) de radiotransmission de station (BTS1...) de base différente.

25. Procédé suivant l'une des revendications 9 à 17, **caractérisé en ce que** des composantes de signaux d'une liaison de communication subdivisée en plusieurs composantes de signaux sont affectées à des voies (F1...) de radiotransmission différentes de plusieurs stations (BTS1...) de base.

26. Procédé suivant la revendication 25, **caractérisé en ce que** les composantes de signaux de la liaison de communication sont affectées séquentiellement à des voies (F1...) de radiotransmission différentes de plusieurs stations (BTS1...) de base.

27. Procédé suivant la revendication 25, **caractérisé en ce que** les composantes de signaux de la liaison de communication sont affectées en parallèle à des voies (F1...) de radiotransmission différentes de plusieurs stations (BTS1...) de base.

28. Procédé suivant l'une des revendications 9 à 27, **caractérisé en ce que** les paramètres de plusieurs stations (MS) mobiles ayant de mêmes propriétés (RXLEV, RXQUAL) de transmission sont gérés dans une matrice (CM) de sélection commune.

29. Procédé suivant l'une des revendications 9 à 28, **caractérisé en ce que** les paramètres de plusieurs stations (MS) mobiles ayant des liaisons de communication de même classe (A, B, C, D) de service sont gérées dans une matrice (CM) de sélection commune.
